# EUROPÄISCHE PATENTANMELDUNG

(11) **EP 2 017 132 A2**
(43) Veröffentlichungstag der Anmeldung: **21.01.2009**
(21) Anmeldenummer: 08104605.4
(22) Anmeldetag: 02.07.2008
(51) Int. Cl.: B60R 11/02

(54) **Anordnung zur Halterung eines elektrischen Geräts**

(30) Priorität: 18.07.2007 DE 102007033392
(71) Anmelder: Robert Bosch GmbH, 70442 Stuttgart (DE)
(72) Erfinder: Wunnenberg, Ernst, 31079, Almstedt (DE); Hofmeister, Gerhard, 31141, Hildesheim (DE)

(57) **Zusammenfassung**

Es wird eine Anordnung (1) zur Halterung eines elektrischen Geräts umfassend ein Halteelement (3) zur Halterung des elektrischen Geräts, ein Befestigungselement (2) zur Befestigung der Anordnung und ein Mittel (4) zum Verschwenken des Haltelements (3) gegenüber dem Befestigungselement (2), vorgeschlagen, welche sich dadurch auszeichnet, dass das Befestigungselement als Rahmen (2) ausgebildet ist und dass das Mittel zum Verschwenken des Halteelements (3) in Form einer in dem Rahmen (2) gehaltenen Schwenkachse (4) ausgebildet ist, um die das Halteelement (3) von einer Gebrauchslage (10) in eine Nichtgebrauchslage (11) verschwenkbar ist.

Die Erfindung hat den Vorteil, dass bei Nichtgebrauch der Halterung diese mit geringem Aufwand in eine Nichtgebrauchsstellung oder Ruhestellung bringbar ist. In dieser erscheint die Halterung optisch unauffällig, weiter ragen bei Nichtgebrauch der Halterung keine hervorstehenden Teile in den Fahrzeuginnenraum, die eine Verletzungsgefahr begründen könnten.

## Beschreibung

### Stand der Technik

Die Erfindung geht von einer Anordnung nach der Gattung des unabhängigen Patentanspruchs aus.

Bekannt sind Navigationssysteme für den mobilen Einsatz, welche auch als PND (=Personal Navigation Device) oder PNA (Personal Navigation Assistent) bezeichnet werden. Es handelt sich dabei um Navigationsgeräte auf Basis von herkömmlichen für einen mobilen Einsatz vorgesehenen Geräten, wie Mobiltelefone oder Handheld-Computer (auch PDA = Personal Digital Assistent), die mit einer Navigationssoftware und Ortungsmitteln ausgestattet sind und zur Routenplanung auf eine digitale Karte zugreifen oder um für diesen Einsatzzweck spezielle vorbereitete tragbare Kleinrechner.

Zur Verwendung solcher bekannter Navigationsgeräte zur Zielführung eines Fahrzeugführers können diese im Blickfeld des Fahrzeugführers am Fahrzeug, im Falle eines Kfz insbesondere im Bereich einer Mittelkonsole, einer Armaturentafel oder der Frontscheibe, mit einer entsprechenden Halterung, auch als Cradle bezeichnet, befestigt und gehalten werden. Eine solche Halterung ist beispielsweise in Derwent Abstract zu RD 458099 gezeigt. Diese Halterung verfügt über ein Halteelement zur Aufnahme und Halterung des Geräts. Das Halteelement ist an einem sogenannten Schwanenhals, einem plastisch verformbaren, nach Verformung in sich stabilen Stab, angeordnet, der mit einer an dem dem Halteelement abgewandten Ende angeordneten Grundplatte an Fahrzeugteilen verschraubbar ist. Durch geeignete Verformung des Schwanenhalses kann das in dem Halteelement gehaltene Navigationsgerät in eine für die Bedienung oder das Ablesen bevorzugte Position gebracht und dort gehalten werden.

Bekannt sind auch Halterungen, die mittels Saugnapf an einer Windschutzscheibe befestigt werden oder Halterungen, die im Bereich der Lüftungsauslässe der Mittelkonsole bzw. Armaturentafel geklemmt und/oder verschraubt werden.

### Vorteile der Erfindung

Die vorliegende Erfindung mit den Merkmalen des unabhängigen Patentanspruchs hat den Vorteil, dass bei Nichtgebrauch der Halterung diese mit geringem Aufwand in eine Nichtgebrauchsstellung oder Ruhestellung bringbar ist. Dabei ist es von besonderem Vorteil, dass die Halterung bei Nichtgebrauch optisch unauffällig erscheint, so dass einem Betrachter keinerlei Anlass geboten wird, in einem beispielsweise geparkten Pkw nach einem von der Halterung abgenommenen elektrischen Gerät, wie PNA oder Mobiltelefon oder dergleichen zu suchen. Es ist weiter von besonderem Vorteil, dass bei Nichtgebrauch der Halterung keine hervorstehenden Teile in den Fahrzeuginnenraum ragen, die eine erhöhte Verletzungsgefahr etwa bei einem Auffahrunfall oder dergleichen begründen könnten.

Die Erfindung hat weiterhin den Vorteil, dass gegenüber einer Schwanenhalshalterung geringere Vibrationen des zu haltenden Geräts auftreten, so dass beispielsweise die Ablesbarkeit dessen Display verbessert wird. Gegenüber einer Winschutzscheibenmontage wird das Sichtfeld des Fahrzeugführers weniger beeinträchtigt und eine Verletzungsgefahr für den Fall einer Airbag-Auslösung reduziert. Weiterhin entfällt eine optisch störende, offen liegende Verkabelung.

Vorteilhaft weist das Halteelement ein Aufnahmeelement zur Aufnahme des elektrischen Geräts auf, das gegenüber dem Halteelement um eine Kippachse, die im Wesentlichen senkrecht zur Schwenkachse verläuft, verkippbar gelagert ist. Vorteilhaft ist das Halteelement alternativ oder ergänzend um eine Drehachse, die im Wesentlichen senkrecht zur Schwenkachse verläuft, verdrehbar gelagert. Damit ergeben sich weitgehende Möglichkeiten zur Justierung der Position und Lage des elektrischen Geräts, so dass dessen Ablesbarkeit und/oder Bedienbarkeit verbessert werden kann.

Vorteilhaft ist weiterhin ein Rastmechanismus zur Verrastung des Halteelements in einer von mehreren Verschwenkpositionen außerhalb der Nichtgebrauchslage und/oder zur Verrastung des Aufnahmeelements vorgesehen. Damit kann die gefundene Position des Geräts gegen unbeabsichtigtes Verschwenken, Verdrehen und/oder Verkippen gesichert werden.

Vorteilhaft kann ein Rahmen der Anordnung zum Einbau in einem Multimediaschacht, insbesondere im Bereich einer Armaturentafel oder einer Mittelkonsole eines Kraftfahrzeugs vorgesehen sein. Der Rahmen kann dabei bevorzugt neben der Halterung Raum für die Anordnung eines Ablagefaches oder den Einbau eines Multimediageräts aufweisen. Weiterhin kann der Rahmen auch als Teil einer Frontkappe eines Multimediageräts ausgebildet sein.

### Zeichnungen

Ausführungsbeispiele der Erfindung sind in den Figuren dargestellt und werden nachfolgend näher erläutert.

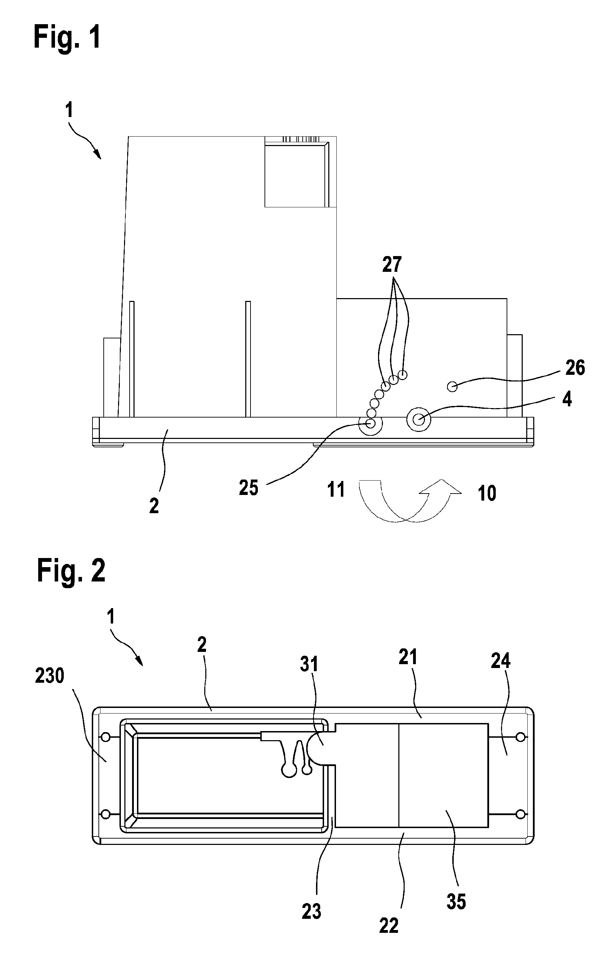

Es zeigen
Figur 1 eine Aufsicht einer vorteilhaften Ausführungsform der erfindungsgemäßen Anordnung in Nichtgebrauchslage,
Figur 2 eine Frontansicht dieser vorteilhaften Ausführungsform der erfindungsgemäßen Anordnung in Nichtgebrauchslage,

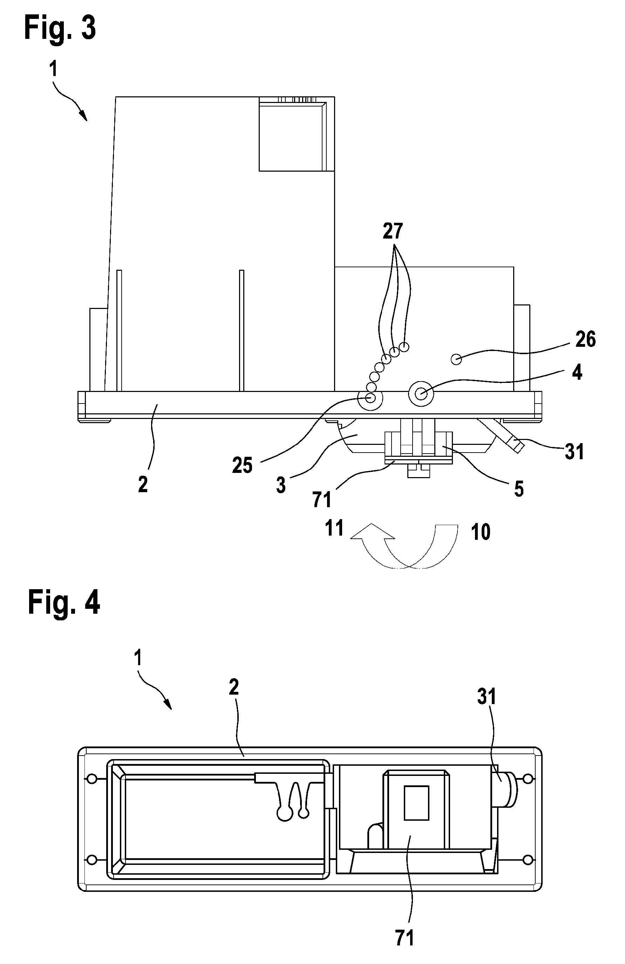

Figur 3 eine Aufsicht einer vorteilhaften Ausführungsform der erfindungsgemäßen Anordnung in Gebrauchslage,
Figur 4 eine Frontansicht dieser vorteilhaften Ausführungsform der erfindungsgemäßen Anordnung in Gebrauchslage und

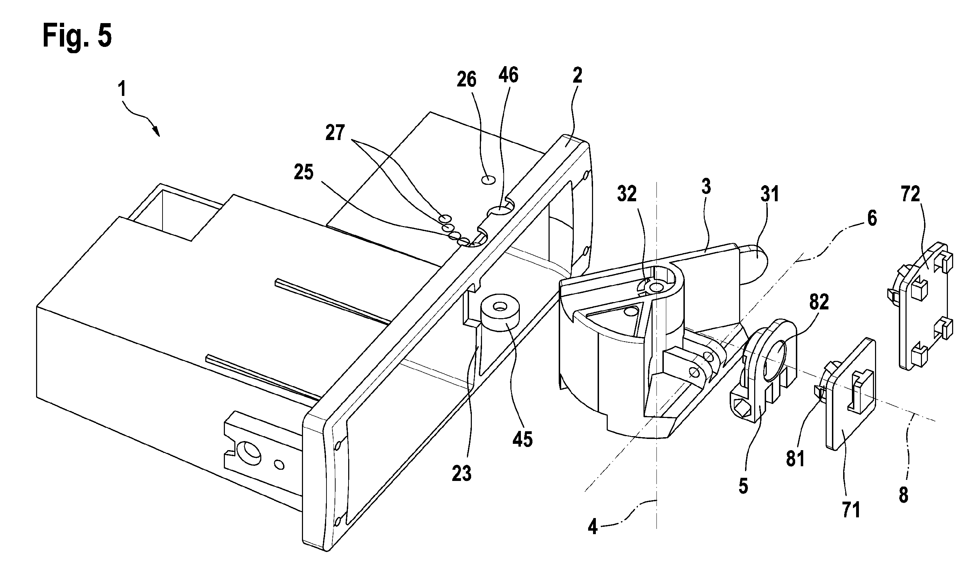

Figur 5 eine Schräg-Drauf- und Frontansicht einer Sprengzeichnung dieser vorteilhaften Ausführungsform der erfindungsgemäßen Anordnung.

Gleiche Bezugszeichen in den Figuren kennzeichnen dabei gleiche Elemente der Anordnung.

### Beschreibung der Ausführungsbeispiele

Die erfindungsgemäße Anordnung weist einen Rahmen 2 auf, der aus einer Rahmenoberseite 21, einer Rahmenunterseite 22, einem ersten, linken Rahmenseitenteil 23 und einem zweiten, rechten Rahmenseitenteil 24 besteht. Dieser Rahmen 2 umgibt eine rechteckige Fläche.

Der Rahmen 2 ist vorzugsweise zur Befestigung in einem Einbauschacht einer Mittelkonsole oder eines Armaturenbretts eines Kraftfahrzeugs vorgesehen. Kraftfahrzeuge weisen üblicherweise solche Einbauschächte in einem genormten oder proprietären Format auf, die zur Aufnahme von Multimediageräten, wie Autoradio, Navigationssystem, CD- oder DVD-Laufwerk oder dergleichen oder alternativ zur Aufnahme vorgesehen sind. Der Rahmen kann dabei entweder den gesamten Einbauschacht abdecken oder nur einen Teil des Einbauschachts, so dass daneben, darüber oder darunter auch noch eine Multimediagerät mit reduzierten Abmessungen angeordnet werden kann. Der Rahmen 2 kann insbesondere auch Teil eines Multimediageräts sein, wobei der Rahmen dann einen Teil der Frontkappe des Geräts darstellt. Unter Frontkappe wird hier die dem Benutzer im eingebauten Zustand des Geräts zugewandte Bedienoberfläche mit Bedienelementen und/oder Anzeigeelementen verstanden.

Alternativ kann der Rahmen 2, wie in den Figuren dargestellt, auch derart ausgebildet sein, dass darin neben einem nachfolgend näher beschriebenen Halteelement 3 ein Einbauplatz für ein Multimediagerät vorgesehen ist. Der Einbauplatz für das Multimediagerät ist in den Figuren links dargestellt und wird durch ein weiteres linkes Rahmenteil 230 nach links und das erste linke Rahmenteil 23 nach rechts begrenzt. Dieser Einbaurahmen weist in der Figur nicht dargestellte Mittel zur Befestigung im Einbauschacht eines Kraftfahrzeugs auf. Wird dieser Einbauschacht nicht für ein Multimediagerät genutzt, kann hier beispielsweise ein Ablagefach angeordnet sein oder werden. Wie in den Figuren angedeutet, kann der Rahmen nach hinten durch ein Gehäuse abgeschlossen sein.

Der Rahmen 2 weist Mittel zur Halterung beziehungsweise Führung einer in den Figuren nur angedeuteten Schwenkachse 4 auf. Diese Mittel bestehen hier aus einem auf der Oberseite des Rahmenunterteils 22 und auf der Unterseite des Rahmenoberteils 21 angeordneten Zylinderstumpf 45, der eine zentrale Sackbohrung zur Aufnahme der Schwenkachse 4 aufweist und einer Bohrung 46 im Rahmenoberteil 21, durch die hindurch die Schwenkachse in den Zylinderstumpf 45 eingesetzt wird. Die Achse 4 wird im vorliegenden Fall beispielsweise durch einen Sprengring oder dergleichen gegen axiale Verschiebung gesichert.

Die erfindungsgemäße Anordnung weist weiterhin ein Halteelement 3 auf, welches der Halterung eines elektrischen Geräts, beispielweise Mobiltelefon, PNA, MP3-Abspielgerät oder dergleichen dient. Dieses Halteelement 3 weist eine Bohrung zur Aufnahme der Schwenkachse 4 auf. Somit ist das Halteelement 3 innerhalb des Rahmens 2 und relativ zu diesem um die Schwenkachse 4 verschwenkbar. Zum Erleichtern eines manuellen Verschwenkens des Halteelements 3 durch den Benutzer weist dieses eine Handhabe in Form einer Lasche 31 auf, die in einer Gebrauchslage 10 des Halteelements 3 zumindest teilweise in Richtung des Benutzers, im vorliegenden Fall in den Fahrzeuginnenraum, hineinragt.

Zur Arretierung des Halteelements 3 in verschiedenen Schwenkpositionen, insbesondere zur Arretierung in der Nichtgebrauchslage 11 und in einer oder mehreren Gebrauchslagen 10 sind Arretierungs- bzw. Rastmittel vorgesehen. Im vorliegenden Fall sind diese durch Bohrungen 25, 26 und 27 in der Rahmenoberseite 21 realisiert, die mit einer durch Federkraft beaufschlagten, auf der Oberseite des Halteelements 3 angeordneten Kugel mit gegenüber den Bohrungen größerem Durchmesser derart zusammenwirken, dass die Kugel durch die Federkraft von unten in diese Bohrungen gedrückt wird. Die Bohrungen 25 und 27 dienen der Arretierung des Halteelements in einer Gebrauchsstellung 10 oder in weiteren Gebrauchsstellungen, die gegenüber der Gebrauchsstellung 10 verschwenkt sind und insbesondere eine Ausrichtung auf den in den Figuren links versetzt vor dem Rahmen befindlichen Fahrzeugführer bedingen. Die Bohrung 26 dient der Arretierung des Halteelements 3 in einer Nichtgebrauchslage 11.

Die Gebrauchslage 10 zeichnet sich dadurch aus, dass eine Geräteaufnahme 71, nachfolgend auch Aufnahmeelement, zur Aufnahme und Halterung des zu haltenden elektrischen Geräts bei Einbau des Rahmens 2 beispielsweise in die Mittelkonsole oder Armaturentafel eines Pkw, in Richtung des Fahrzeuginnenraums zeigt und somit dem Fahrzeugführer zugewandt ist. In dieser Schwenkposition kann ein elektrisches Gerät an der Geräteaufnahme 71 angesetzt und dort zur Information des Fahrzeugführers gehalten werden.

Die Nichtgebrauchslage 11 zeichnet sich hingegen dadurch aus, dass die Geräteaufnahme in den Rahmen bzw. den Einbauschacht verschenkt und somit aus Sicht des Fahrzeugführers oder des Fahrzeuginnenraums nicht sichtbar ist. Zur Tarnung der erfindungsgemäßen Vorrichtung sowie zur Herstellung einer gefälligen Ansicht hier der Mittelkonsole oder der Armaturentafel weist das Halteelement 3 auf seiner Rückseite, welche in der Nichtgebrauchslage 11 dem Fahrzeuginnenraum zugewandt ist, eine vorzugsweise ebene Zierfläche 35 auf. Die Ansicht dieser Zierfläche 35 ist vorzugsweise an ihre Umgebung angepasst, kann also im einfachsten Fall Farbe und Struktur der Armaturentafel oder der Mittelkonsole angepasst sein. Ist, in den Figuren links, neben dem Halteelement 3 ein Multimediagerät im Einbauschacht oder alternativ im Einbauschacht des Rahmens 2 angeordnet, kann die Zierfläche 35 beispielsweise auch an dessen Frontkappe angenähert sein. Insbesondere kann beispielsweise die Zierfläche auch als Anzeigevorrichtung, etwa LCD, OLED oder dergleichen ausgebildet sein und in der Nichtgebrauchslage 11 des Halteelements 3 der Anzeige von Informationen des in den Figuren nicht dargestellten Multimediageräts dienen.

Zur Anpassung der erfindungsgemäßen Anordnung an verschiedenartige elektrische Geräte sind verschiedenartige Geräteadapter 71 und 72 vorgesehen, die austauschbar an dem Halteelement 3 befestigbar sind. Die Geräteadapter zeichnen sich durch gerätetypspezifische Geräteaufnahmen aus. Im Fall des ersten Geräteadapters 71 ist dies beispielsweise ein T-förmiges Adapter, das in eine entsprechende T-Nut auf der Rückseite des zu haltenden Geräts eingreift. Im Falle des zweiten Geräteadapters 72 sind dies beispielsweise Rasthaken, die in entsprechende Ausnehmungen einer Rückplatte des Geräts eingreifen oder Seitenkanten des Geräts umgreifen und dort verrasten.

Gemäß der hier vorgestellten besonders vorteilhaften Ausführungsform der Erfindung weisen die Geräteadapter 71, 72 Mittel zur verdrehbaren Befestigung an dem Halteelement 3 auf. Diese sind durch einen näherungsweise runden Zapfen 81 mit federnden Rasthaken ausgebildet, die in eine entsprechende runde Bohrung 82 einsetzbar sind und in dieser verrasten. Somit ist das Geräteadapter 71, 72 und damit das daran gehaltene elektrische Gerät um die durch den runden Zapfen 81 und die entsprechende runde Aufnahmebohrung 82 gebildete Drehachse 8, die im wesentlichen senkrecht zur Schwenkachse 4 und im wesentlichen auf den Benutzer zu verläuft, drehbar.

Weiterhin ist gemäß der hier vorgestellten besonders vorteilhaften Ausführungsform der Erfindung der Geräteadapter 71, 72 auch in der Vertikalen um eine Kippachse 6, die im Wesentlichen senkrecht zur Schwenkachse 4 und senkrecht zur Drehachse 8 verläuft, verkippbar. Dies wird dadurch erreicht, dass eine Geräteadapteraufnahme 5, die die Bohrung 82 aufweist, um die Kippachse 5 kippbar an dem Halteelement 3 angeordnet ist. In Verbindung mit den Rastbohrungen 25 und 27 sowie der Drehbarkeit um die Drehachse 8 ergeben sich damit weitgehende Möglichkeiten zur Justierung der Position eines an dem Halteelement 3 angeordneten bzw. gehaltenen Geräts.

## Patentansprüche

1. Anordnung (1) zur Halterung eines elektrischen Geräts umfassend ein Halteelement (3) zur Halterung des elektrischen Geräts, ein Befestigungselement (2) zur Befestigung der Anordnung und ein Mittel (4) zum Verschwenken des Haltelements (3) gegenüber dem Befestigungselement (2),
**dadurch gekennzeichnet**
**dass** das Befestigungselement als Rahmen (2) ausgebildet ist und dass das Mittel zum Verschwenken des Halteelements (3) in Form einer in dem Rahmen (2) gehaltenen Schwenkachse (4) ausgebildet ist, um die das Halteelement (3) von einer Gebrauchslage (10) in eine Nichtgebrauchslage (11) verschwenkbar ist.

2. Anordnung nach Anspruch 1, **dadurch gekennzeichnet, dass** das Halteelement ein Zierfläche aufweist, die nach Verschwenkung des Haltelements um die Schwenkachse in eine Nichtgebrauchslage eine von dem Rahmen umgebene Fläche ausfüllt.

3. Anordnung nach einem der vorhergehenden Ansprüche, **dadurch gekennzeichnet, dass** das Halteelement ein Aufnahmeelement zur Aufnahme des elektrischen Geräts aufweist und dass das Aufnahmeelement gegenüber dem Halteelement um eine Kippachse, die im Wesentlichen senkrecht zur Schwenkachse verläuft, verkippbar gelagert ist.

4. Anordnung nach einem der vorhergehenden Ansprüche, **dadurch gekennzeichnet, dass** das Halteelement ein Aufnahmeelement zur Aufnahme des elektrischen Geräts aufweist und dass das Aufnahmeelement gegenüber dem Halteelement um eine Drehachse, die im Wesentlichen senkrecht zur Schwenkachse verläuft, verdrehbar gelagert ist.

5. Anordnung nach einem der vorhergehenden Ansprüche, **dadurch gekennzeichnet, dass** mindestens ein Rastmechanismus zur Verrastung des Halteelements in einer Verschwenkposition außerhalb der Nichtgebrauchslage und/oder zur Verrastung des Aufnahmeelements vorgesehen ist.

6. Anordnung nach einem der vorhergehenden Ansprüche, **dadurch gekennzeichnet, dass** der Rahmen zum Einbau in einem Multimediaschacht, insbesondere im Bereich einer Armaturentafel oder einer Mittelkonsole eines Kraftfahrzeugs vorgesehen ist.

7. Anordnung nach einem der Ansprüche 1 bis 5, **dadurch gekennzeichnet, dass** der Rahmen als Teil einer Frontkappe eines Multimediageräts ausgebildet ist.
